(19) Europäisches Patentamt
European Patent Office
Office européen des brevets

(11) **EP 2 927 849 A1**

(12) **EUROPÄISCHE PATENTANMELDUNG**

(43) Veröffentlichungstag:
07.10.2015 Patentblatt 2015/41

(51) Int Cl.:
***G06Q 10/06*** *(2012.01)*

(21) Anmeldenummer: **14163109.3**

(22) Anmeldetag: **02.04.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Deutsche Lufthansa AG**
**50679 Köln (DE)**

(72) Erfinder:
• **Echtermeyer, Karl**
**65719 Hofheim (DE)**
• **Coenen, Werner**
**60488 Frankfurt (DE)**

(74) Vertreter: **Glawe, Delfs, Moll**
**Partnerschaft mbB von**
**Patent- und Rechtsanwälten**
**Rothenbaumchaussee 58**
**20148 Hamburg (DE)**

(54) **Verfahren und Computerprogrammprodukt zur Analyse von Flugpassagier-Ticket-Massendatenbeständen**

(57) Die Erfindung betrifft ein Verfahren zur Analyse von Flugpassagier-Ticket-Massendatenbeständen mit den Schritten:

a. Verknüpfen von Ticket-Daten mit Flugplaninformationen zur Bildung einer Datenbank (13) umfassend Ticket-Coupon-Daten (23) für jedes Flugereignis;

b. Sicherstellen, dass die einzelnen Ticket-Coupons (23) für jedes Flugereignis entsprechend der jeweiligen Ticket-Coupon-Einkünfte in einer vorgegebenen Reihenfolge sortiert sind;

c. Ermitteln der Einkünfte (32, 33) für jedes Flugereignis in Abhängigkeit der Anzahl der laufenden Passagiernummer (31) entsprechend der sortierten Ticket-Coupons (23);

d. Ermitteln von Kalibrierungsparametern einer Funktion $Y_i(X)$ für jedes einzelne Flugereignis $i$, wobei $Y_i$ für die Einkünfte und $X$ für die laufende Passagiernummer steht, wobei die Kalibrierung der Funktion $Y_i(X)$ anhand der ermittelten Einkünfte (32, 33) in Abhängigkeit der laufenden Passagiernummer (31) derart erfolgt, dass die Abweichungen der Funktionswerte $Y_i$ von den ermittelte Einkünften möglichst gering sind; und

e. Zusammenfassen mehrerer kalibrierter Funktionen in anhand von Fluginformationen zuordenbare Cluster.

Die Erfindung betrifft weiterhin ein Computerprogrammprodukt zur Durchführung dieses Verfahrens.

**Fig. 1**

**Beschreibung**

Die Erfindung betrifft ein Verfahren sowie ein Computerprogrammprodukt zur Analyse von Flugpassagier-Ticket-Massendatenbeständen.

Fluggesellschaften verfügen über umfangreiche Informationen betreffend in der Vergangenheit durchgeführte Flüge. Wenigstens ein Teil dieser Informationen sind in Flugpassagier-Ticket-Massendatenbeständen hinterlegt. In diesen Datenbeständen ist für jedes einzelne von der Fluggesellschaft verkaufte Ticket ein Datensatz vorhanden, wobei ein Datensatz bspw. Informationen über die Flugstrecke, das Flugdatum sowie den Ticketpreis umfasst.

Insbesondere auch aufgrund der im Bereich der zivilen Luftfahrt stattgefundenen Unternehmenskonzentration, die zu grundsätzlich global agierenden Fluggesellschaften mit großen Streckennetzen und sehr vielen Flugbewegungen geführt hat, hat ein Flugpassagier-Ticket-Massendatenbestand einer Fluggesellschaft regelmäßig beträchtlichen Umfang, insbesondere in den Fällen in denen sich ein Massendatenbestand über mehr als ein Kalenderjahr erstreckt.

Bei jeder Fluggesellschaft besteht regelmäßig ein hohes Interesse daran, aus dem jeweiligen Flugpassagier-Ticket-Massendatenbestand Informationen zu ermitteln, die als Grundlage für Unternehmungsentscheidungen dienen können. Zu diesen Entscheidungen können Änderungen am Flugplan (bspw. Streichung von Strecken, Änderung der Abflugzeit oder auch Ankunftszeit, Änderung der Frequenz auf einzelnen Strecken, Änderung der auf bestimmten Strecken eingesetzten Flugzeuge etc.), Flottenplanung (bspw. Stilllegung oder Zukauf von Flugzeugen bestimmter Größe und Reichweite) oder Erstellung eines Anforderungsprofils für neue Flugzeuge, welches dann einem Flugzeughersteller als Ausgangspunkt für eine Neuentwicklung zu Verfügung gestellt werden kann, gehören.

Im Stand der Technik ist es hierzu bekannt, einzelne Kennzahlen aus einem Flugpassagier-Ticket-Massendatenbestand zu ermitteln. So können bspw. die Gesamteinkünfte für eine vorgegebene Strecke in einem vorgegebenen Zeitraum durch das Aufsummieren der Ticketpreise der die entsprechenden Randbedingungen erfüllenden Datensätze aus dem Flugpassagier-Ticket-Massendatenbestand ermittelt werden. Auch kann die Anzahl der auf einer bestimmten Strecke in einem vorgegebenen Zeitraum beförderten Passagiere ermittelt werden. Durch ein Verknüpfen dieser beiden Informationen können die durchschnittlichen Einkünfte pro beförderten Passagier berechnet werden. Die (durchschnittlichen) Einkünfte können auch für jede Beförderungsklasse (bspw. "First", "Business", "Economy") gesondert ermittelt werden, was jedoch zu einer entsprechenden Erhöhung der Anzahl von Kennzahlen führt.

Um für die oben angesprochenen Entscheidungen eine vermeintlich ausreichende und fundierte Grundlage zu schaffen, müssen die genannten Kennzahlen für alle von einer Fluggesellschaft durchgeführten Flüge innerhalb von mindestens einem Jahr, häufig sogar von über einem Jahr ermittelt werden. Aufgrund der schieren Größe von Flugpassagier-Ticket-Massendatenbeständen, wie sie regelmäßig vorliegt, sind für die entsprechende Ermittlung dieser Kennzahlen besonders leistungsstarke Rechner erforderlich, die dafür dennoch einen beachtlichen Zeitraum benötigen.

Aufgrund dieser technischen Gegebenheiten beschränkt sich im Stand der Technik die Analyse von Flugpassagier-Ticket-Massendatenbeständen im Allgemeinen ausschließlich auf die Ermittlung einer vorgegebenen Mengen an Kennzahlen, die dann als statische Werte einer weiteren statistischen Auswertung zugeführt werden. Die Menge der ermittelten Kennzahlen ist dabei so gewählt, dass ihre Anzahl auch von weniger leistungsstarken Rechnern weiterverarbeitet werden kann.

Für strategische Entscheidungen werden die ermittelten Kennzahlen mit angenommenen oder strategisch geschätzten Korrekturfaktoren kombiniert. Eine umfassende Überprüfung der Korrekturfaktoren auf Plausibilität anhand der Flugpassagier-Ticket-Massendatenbestände ist dabei jedoch praktisch nicht möglich. Hierfür wäre nämlich eine äußerst zeitaufwendige, Personalressourcen bindende und rechnerintensive Datenanalyse der Flugpassagier-Ticket-Massendatenbestände erforderlich, die grundsätzlich nur auf extrem leistungsstarken Rechnern durchgeführt werden kann und selbst dort einen beträchtlichen Zeitraum benötigen würden. Da entsprechende Rechnerkapazität für eine entsprechende Datenanalyse bei Fluggesellschaften regelmäßig nicht zur Verfügung steht, wird im Stand der Technik grundsätzlich auf eine entsprechende Überprüfung verzichtet. Es existieren aufgrund fehlender praktischer Einsatzmöglichkeiten im Stand der Technik noch nicht einmal Modelle, mit denen eine für die genannten Zwecke geeignete Datenanalyse möglich wäre.

Im Stand der Technik ist die Analyse von großen Flugpassagier-Ticket-Massendatenbeständen aufgrund von Beschränkungen der Rechnerkapazität also regelmäßig auf die Bestimmung einer Menge an vorgegebenen Kenngrößen beschränkt. Bei diesen Kennzahlen handelt es sich jedoch um statische Größen, ausgehend von denen Veränderungen nur subjektiv abgeschätzt werden können, bspw. in Form von "strategischen Abschlägen", mit denen z. B. veränderten Marktbedingungen Rechnung getragen werden soll. Weitergehende Informationen können aufgrund von regelmäßig begrenzter Rechnerkapazität aus den Flugpassagier-Ticket-Massendatenbeständen im Stand der Technik nicht gewonnen werden.

Der Erfindung liegt daher die Aufgabe zugrunde, ein Verfahren sowie eine Vorrichtung zu schaffen, welches die Nachteile aus dem Stand der Technik beseitigt oder zumindest verringert.

Gelöst wird diese Aufgabe durch ein Verfahren gemäß dem Hauptanspruch sowie ein Computerprogrammprodukt gemäß dem unabhängigen Anspruch 12. Vorteilhafte Weiterbildungen sind Gegenstand der abhängigen Ansprüche.

Demnach betrifft die Erfindung ein Verfahren zur Analyse von Flugpassagier-Ticket-Massendatenbeständen mit den Schritten:

a. Verknüpfen von Ticket-Daten mit Flugplaninformationen zur Bildung einer Datenbank umfassend Ticket-Coupon-Daten für jedes Flugereignis;

b. Sicherstellen, dass die einzelnen Ticket-Coupons für jedes Flugereignis entsprechend der jeweiligen Ticket-Coupon-Einkünfte in einer vorgegebenen Reihenfolge sortiert sind;

c. Ermitteln der Einkünfte für jedes Flugereignis in Abhängigkeit der Anzahl der laufenden Passagiernummer entsprechend der sortierten Ticket-Coupons;

d. Ermitteln von Kalibrierungsparametern einer Funktion $Y_i(X)$ für jedes einzelne Flugereignis i, wobei $Y_i$ für die Einkünfte und X für die laufende Passagiernummer steht, wobei die Kalibrierung der Funktion $Y_i(X)$ anhand der ermittelten Einkünfte in Abhängigkeit der laufenden Passagiernummer derart erfolgt, dass die Abweichungen der Funktionswerte $Y_i$ von den ermittelte Einkünften möglichst gering sind; und

e. Zusammenfassen mehrerer kalibrierter Funktionen in anhand von Fluginformationen zuordenbare Cluster.

Die Erfindung betrifft weiterhin ein Computerprogrammprodukt zur Analyse von Flugpassagier-Ticket-Massendatenbeständen gemäß dem erfindungsgemäßen Verfahren.

Das erfindungsgemäße Verfahren ermöglicht es, auch sehr umfangreiche Flugpassagier-Ticket-Massendatenbestände derart nutzbar zu machen, dass viele aus dem Stand der Technik bekannte Beschränkungen hinsichtlich der gewinnbaren Informationen aufgrund von regelmäßig nicht vorhandener Rechnerkapazität überwunden werden können. Dazu werden für die einzelnen Flugereignisse aus einem Flugpassagier-Ticket-Massendatenbestand jeweils eine Funktion kalibriert und mehrere ähnlich kalibrierte Funktionen in anhand von Fluginformationen zuordenbare Cluster zusammengefasst. Mit den so ermittelten Funktionen für eine Flugstrecke oder für alle Flugstrecken eines Clusters können - wie nachfolgend gezeigt - auch mit Hilfe wenig leistungsstarker Rechner unterschiedliche, detaillierte Analysen und Vorhersagen getroffen werden, ohne auf subjektive Vermutungen oder strategisch geschätzte Korrekturfaktoren zurückgreifen zu müssen, wie es aufgrund von mangelnder Rechnerleistung im Stand der Technik regelmäßig notwendig war.

Dabei ist zu beachten, dass die für die Kalibrierung der genannten Funktionen erforderliche Rechnerkapazität nicht unbedingt geringer ist als diejenige, die für die Ermittlung von Kennzahlen gemäß dem Stand der Technik benötigt wird. Jedoch ermöglichen die mit dem erfindungsgemäßen Verfahren ermittelten und in zuordenbare Cluster zusammengefasste Funktionen an das erfindungsgemäße Verfahren anschließende umfangreiche und detaillierte Analysen, ohne dass für einzelne Analyseschritte eine wiederholte Neuberechnung von Kennwerten oder sonstige numerische, auf den gesamten Flugpassagier-Ticket-Massendatenbeständen anzuwendende Verfahren notwendig wären. Die umfangreichen und detaillierten Analysen benötigen mit dem erfindungsgemäßen Verfahren daher um ein Vielfaches geringere Rechenleistung als im Stand der Technik - sofern dort entsprechende Analysen überhaupt möglich waren - und können demnach auch auf weniger leistungsstarken Rechnern durchgeführt werden.

Bei dem erfindungsgemäßen Verfahren werden in einem ersten Schritt Ticket-Daten mit Flugplaninformationen verknüpft, um so eine Datenbank mit Ticket-Coupon-Daten für jedes Flugereignis zu erhalten.

Bei den Ticket-Daten handelt es sich im Wesentlichen um Daten, wie sie aus den Flugpassagier-Ticket-Massendatenbeständen gemäß dem Stand der Technik bekannt sind. Für jedes einzelne, von einer Fluggesellschaft in einem vorgegebenen Zeitraum verkaufte Flugticket liegen Daten wie bspw. Reiseweginformationen und Ticketinformationen vor. Die Reiseweginformationen können Informationen über die Flugstrecke umfassend Abflugs- und Ankunftsort sowie ggf. Zwischenstopps, das Flugdatum und/oder die Abflug- und Ankunftszeit der einzelnen Teilstrecken sowie die entsprechenden Flugnummern enthalten. Die Ticketinformationen umfassen vorzugsweise die jeweiligen Ticketeinkünfte und die gebuchte Beförderungsklasse, bspw. "First", "Business" oder "Economy".

In den Ticket-Daten können diejenigen Flugtickets, die eine Flugverbindung mit wenigstens einem Zwischenstopp und mehreren Teilflugstrecken betreffen, bereits derart hinterlegt sein, dass für jede der Teilflugstrecken ein eigener Satz an Daten mit entsprechenden Informationen über die Teilflugstrecke in Form von Teilstrecken-Ticket-Daten hinterlegt ist. Ist dies nicht der Fall, werden die Ticket-Daten eines Flugtickets für eine Flugverbindung mit mehreren Teilstrecken vor oder bei dem Zusammenführen der Ticket-Daten mit Flugplaninformationen vorzugsweise in Teilstrecken-Ticket-Daten, also in mehrere Datensätze jeweils betreffend eine der Teilstrecken, aufgeteilt. Werte, die ausschließlich für die Gesamtflugstrecke vorliegen, wie beispielsweise die Ticketeinkünfte, können bspw. entsprechend der Längen der einzelnen Teilflugstrecken auf die einzelnen Teilstrecken-Ticket-Daten aufgeteilt werden.

Die Flugplaninformationen umfassen Informationen zu allen Flügen, auf welche sich die Ticket-Daten beziehen, d. h. Fluginformationen zu allen durch die Fluggesellschaft in dem gleichen Zeitraum durchgeführten Flüge, für die auch Ticket-Daten vorliegen. Die einzelnen Fluginformationen enthalten vorzugsweise neben Informationen über die Flugstrecke sowie Abflug- und Ankunftszeit (ggf. inkl. Datum) auch noch Informationen über den eingesetzten Flugzeugtyp, die Gesamtanzahl der Sitzplätze, die Sitzplatzkonfiguration als Anteile der unterschiedlichen Beförderungsklassen der Gesamtanzahl der Sitzplätze und/oder die Sitzplatzkonfiguration als jeweilige Gesamtanzahl der Sitzplätze in unterschiedlichen Beförderungsklassen. Die Fluginformationen können auch die Flugnummern umfassen. Die Informationen über die Flugstrecke können geographische Informationen über den Abflug- und Ankunftsflughafen enthalten, bspw. Informationen über den Kontinent, die Region und/oder die Stadt, auf oder in der sich die Flughäfen jeweils befinden, aber auch geographische Positionsangaben. Die Informationen über die Flugstrecke können weiterhin Informationen über die Streckenlänge und/oder die Großkreisentfernung zwischen Abflug- und Ankunftsflughafen enthalten.

Für die Verknüpfung der Ticket-Daten mit den Flugplaninformationen wird jeder einzelne Datensatz der Ticket-Daten durch die Fluginformationen desjenigen Fluges, den ein Datensatz der Ticket-Daten betrifft, ergänzt. Zur Verknüpfung können dabei die Flugstrecke, Abflug- und Ankunftszeit und/oder Flugnummer herangezogen werden.

Durch den Schritt der Verknüpfung der Ticket-Daten mit Flugplaninformationen entsteht eine Ticket-Coupon-Datenbank, bei der jedes einzelne Ticket bzw. Teilstrecken-Ticket gegenüber den ursprünglichen Ticket- bzw. Teilstrecken-Ticket-Daten zusätzliche Informationen betreffend die Durchführung des Fluges, den das jeweilige Ticket bzw. Teilstrecken-Ticket betrifft, umfasst. Zu diesen zusätzlichen Informationen können insbesondere Flugzeugtyp, die Gesamtanzahl an Sitzplätzen und/oder die Sitzplatzkonfiguration des Flugzeuges, mit dem der jeweilige Flug durchgeführt wurde, gehören.

In einem nächsten Schritt wird sichergestellt, dass die einzelnen Ticket-Coupons für jedes Flugereignis in der Ticket-Coupon-Datenbank entsprechend der jeweiligen Ticketeinkünfte in einer vorgegebenen Reihenfolge sortiert sind. Insbesondere können die Ticket-Coupons in absteigender oder aufsteigender Reihenfolge sortiert sein. Bei absteigender Sortierung ist dann das erste Ticket-Coupon dasjenige mit den höchsten Ticketeinkünften, das letzte Ticket-Coupon dasjenige mit den niedrigsten Ticketeinkünften für das jeweilige Flugereignis. Bei aufsteigender Sortierung ist das erste Ticket-Coupon dasjenige mit den niedrigsten Ticketeinkünften, das letzte Ticket-Coupon dasjenige mit den höchsten Ticketeinkünften für das jeweilige Flugereignis.

"Sicherstellen" in diesem Zusammenhang bedeutet, dass am Ende dieses Verfahrensschrittes die Ticket-Coupons für jedes Flugereignis tatsächlich in der vorgegebenen Reihenfolge sortiert sind. Dazu kann bspw. im Rahmen einer geeigneten Überprüfung festgestellt werden, ob die Ticket-Coupons für ein Flugereignis bereits die gewünschte Reihenfolge aufweisen. Nur wenn dies nicht der Fall sein sollte, können die Ticket-Coupons dann entsprechend neu sortiert werden. Alternativ zu einer Überprüfung mit anschließender evtl. Sortierung ist es auch möglich, ohne vorherige Überprüfung einen Sortieralgorithmus auf die Ticket-Coupons anzuwenden, wobei der Sortieralgorithmus vorzugsweise bei Feststellung, dass die Ticket-Coupons vollständig sortiert sind, abbricht. Methoden zur Überprüfung der Reihenfolge der Ticket-Coupons und zur Sortierung der Ticket-Coupons in eine vorgegebenen Reihenfolge sind aus dem Stand der Technik bekannt. Kann aus anderen Gründen davon ausgegangen werden, dass die Ticket-Coupons bereits zutreffend sortiert sind (bspw. aufgrund entsprechend vorsortierter Ausgangdaten), ist für den Verfahrensschritt des Sicherstellens der gewünschten Reihenfolge kein aktives Handeln erforderlich.

Anschließend werden die Einkünfte für jedes Flugereignis in Abhängigkeit der laufenden Passagiernummer entsprechend der sortierten Ticket-Coupons ermittelt. Bei den zu ermittelten Einkünften kann es sich insbesondere um die durchschnittlichen Einkünfte oder die kumulierten Einkünfte handeln.

Die "durchschnittlichen Einkünften in Abhängigkeit der laufenden Passagiernummer" lassen sich berechnen aus der Summe der Ticketeinkünfte der sortierten Ticket-Coupons, ausgehend vom ersten Ticket-Coupon bis zu einer laufenden Passagiernummer, geteilt durch die laufende Passagiernummer. Die Ermittlung der "kumulierten Einkünfte in Abhängigkeit der laufenden Passagiernummer" verläuft hierzu grundsätzlich analog, wobei jedoch auf die Division durch die laufende Passagiernummer verzichtet wird.

Zur Veranschaulichung kann in diesem Schritt die Erstellung einer Wertetabelle für jedes Flugereignis auf Basis der sortierten Ticket-Coupons gesehen werden. Als Argumente der Wertetabelle dienen Passagiernummern, die ausgehend von 1 bis zur Anzahl der tatsächlich beim betroffenen Flugereignis transportierten Passagiere läuft. Als Funktionswerte werden ausgehend von dem ersten Ticket-Coupon (z. B. bei absteigender Sortierung der Ticket-Coupon mit den höchsten Ticketeinkünften) die durchschnittlichen oder kumulierten Einkünfte in Abhängigkeit der laufenden Passagiernummer wiedergegeben, wobei die entsprechenden Einkünfte durch die Summe der Ticketeinkünfte der sortierten Ticket-Coupons ausgehend vom ersten Ticket-Coupon bis zur laufenden Passagiernummer - im Falle von durchschnittlichen Einkünften geteilt durch die laufende Passagiernummer - gebildet werden können.

Die durchschnittlichen Einkünfte in Abhängigkeit der laufenden Passagiernummer für jedes Flugereignis können insbesondere durch die folgenden, im Hinblick auf die dafür benötigte Rechnerkapazität ressourcensparenden Schritte ermittelt werden:

a) Ermitteln der kumulierten Einkünfte in Abhängigkeit der laufenden Passagiernummer;

b) Division der kumulierten Einkünfte durch die dazugehörige laufende Passagiernummer.

Für die Ermittlung der kumulierten Einkünfte werden die Ticketeinkünfte der vorzugsweise absteigend sortierten Ticket-Coupons der Reihe nach ausgehend von dem ersten Ticket-Coupon vorzugsweise aufsummiert, wobei die jeweilige Anzahl der aufsummierten Ticket-Coupons der kumulierten Einkünfte der laufenden Passagiernummer entspricht. Anschließend werden, um die durchschnittlichen Einkünfte zu erhalten, die einzelnen kumulierten Einkünfte durch die jeweils zugehörige laufende Passagiernummer geteilt.

Sind die Einkünfte in Abhängigkeit der laufenden Passagiernummer für jedes Flugereignis ermittelt, kann im Anschluss für jedes Flugereignis eine Funktion $Y_i(X)$ kalibriert werden. Bei dieser Funktion steht der Index $i$ für das jeweilige Flugereignis, $Y_i$ für die Einkünfte in Abhängigkeit von X, der laufenden Passagiernummer.

Bei einer entsprechend kalibrierbaren Funktion handelt es sich um eine vorgegebene Funktion mit wenigstens einem vorgebbaren Koeffizienten. Die Koeffizienten können so gewählt werden, dass die Abweichungen der Funktionswerte $Y_i$ von den ermittelten Einkünften für jede Passagiernummer X möglichst gering sind. Die Ermittlung der entsprechenden Koeffizienten der Funktion $Y_i(X)$ wird in Zusammenhang mit dieser Erfindung als Kalibrierung der Funktion $Y_i(X)$ bezeichnet und kann bspw. nach der Methode der kleinsten Quadrate erfolgen. Die vorgebbaren Koeffizienten werden auch als "Kalibrierungsparameter" bezeichnet. In anderen Worten erfolgt die Kalibrierung der Funktion $Y_i(X)$ anhand der ermittelten Einkünfte in Abhängigkeit der laufenden Passagiernummer also derart, dass die Abweichungen der Funktionswerte $Y_i$ von den ermittelten Einkünften möglichst gering sind.

Es ist bevorzugt, wenn der Bereich der Funktion $Y_i(X)$ für PassagiernummernX, für die tatsächlich Einkünfte ermittelt wurden, monoton steigend oder monoton fallend ist. Die Anzahl der Kalibrierungsparameter der Funktion $Y_i(X)$ ist vorzugsweise kleiner gleich 10, weiter vorzugsweise kleiner gleich 5, weiter vorzugsweise kleiner gleich 3. Durch eine entsprechende Funktion $Y_i(X)$ kann der Ressourcenaufwand für die Kalibrierung sowie ggf. für die nachfolgend erläuterten Zusammenfassung in Cluster vermindert werden.

Es ist besonders bevorzugt, wenn es sich bei der Funktion $Y_i(X)$ um die Funktion

$$Y_i(X) = A_i \times X^{m_i} \qquad\qquad \text{(Gl. 1)}$$

mit den Kalibrierungsparameter $A_i$ und $m_i$ handelt. Da diese Funktion lediglich zwei Kalibrierungsparameter aufweist, lässt sich die Kalibrierung besonders ressourcensparend durchführen. Gleichzeitig hat sich gezeigt, dass diese Funktion die kumulierten oder durchschnittlichen Einkünfte eines Flugereignisses regelmäßig gut abbildet.

Um die erforderliche Kalibrierung der bevorzugten Funktion $Y_i(X) = A_i \times X^{m_i}$ möglichst ressourcensparend durchzuführen, ist es bevorzugt, die oben genannte Funktion zu logarithmieren, sodass sich die Geradengleichung

$$Y_i^* = m_i \times \log X + \log A_i \qquad\qquad \text{(Gl. 2)}$$

bzw.

$$Y_i^* = m_i \times \log X + B_i \quad \text{mit} \quad B_i = \log A_i \qquad\qquad \text{(Gl. 3)}$$

ergibt. Für den Kalibrierungsparameter $A_i$ gilt dann

$$A_i = 10^{B_i} \qquad\qquad \text{(Gl. 4)}$$

Die genannte Geradengleichung kann mithilfe der im vorhergehenden Schritt ermittelten Einkünfte in Abhängigkeit der laufenden Passagiernummer für jedes Flugereignis einfach und ressourcensparend kalibriert werden, wobei die Optimierung insbesondere die Maximierung des Bestimmtheitsmaßes $R^2$ der Geradengleichung zum Ziel haben kann. Erfahrungen haben gezeigt, dass in 98 % untersuchter Flugereignisse ein Bestimmtheitsmaß $R^2$ von über 99 % erreicht werden kann.

Unabhängig von der letztendlichen Funktion $Y_i(X)$ ist es bei der Kalibrierung besonders bevorzugt, wenn die Kalibrierung lediglich anhand eines vorbestimmten Bereichs des sich ergebenden Verlaufs der Einkünfte erfolgt, insbesondere eines zusammenhängenden Anteils ausgehend von der ersten oder der letzten laufenden Passagiernummer. Die Kalibrierung kann also anhand einer geringeren Anzahl von Werten erfolgen, wodurch die für die Kalibrierung erforderliche Rechnerleistung reduziert werden kann. Der Anteil der zur Kalibrierung heranzuziehenden laufenden Passagiernummern beträgt vorzugsweise 60-80 %, weiter vorzugsweise 70 %.

Ist die Kalibrierung für jedes einzelne Flugereignis aus der Ticket-Coupon-Datenbank abgeschlossen, können die in der Kalibrierung ermittelten Werte (bspw. $B_i$ und $m_i$) sowie ggf. das jeweilige Bestimmtheitsmaß $R^2$ zusammen mit den dazugehörigen Fluginformationen zwischengespeichert werden. Beispielsweise können die entsprechenden Informationen in einer ersten Funktions-Datenbank abgelegt sein, die in ihrer Größe gegenüber der Ticket-Daten oder der Ticket-Coupon-Datenbank deutlich kleiner ist. Die erste Funktions-Datenbank umfasst dann für jedes Flugereignis genau einen Datensatz gegenüber einem Datensatz pro Ticket in den Ticket-Daten oder der Ticket-Coupon-Datenbank.

Um die Möglichkeiten einer nachfolgenden Analyse, aber auch des im Folgenden beschriebenen Zusammenfassens in Cluster noch deutlich zu steigern, ist bevorzugt, wenn neben den genannten ermittelten Werten auch noch Werte über die Auslastung der einzelnen Beförderungsklassen bei dem Flugereignis ermittelt werden. Diese Werte können bspw. in der ersten Funktionsdatenbank zwischengespeichert werden. Die Auslastungswerte können dabei als absolute Anzahl der Passagiere in den einzelnen Beförderungsklassen oder als Anteil an belegten Sitzen in den einzelnen Beförderungsklassen angegeben sein. Die Anzahl der, bspw. in der ersten Funktions-Datenbank, zwischenzuspeichernden Datensätze ändert sich dadurch nicht, sondern entspricht weiterhin der Anzahl der verschiedenen Flugereignisse.

Die einzelnen Flugereignisse werden anschließend unter Zuhilfenahme der jeweiligen Kalibrierungswerte (bspw. $B_i$ und $m_i$) in anhand von Fluginformationen zuordenbare Cluster zusammengefasst. "Anhand von Fluginformationen zuordenbare Cluster" bedeutet in diesem Zusammenhang, dass die einzelnen Cluster derart definiert sind, dass ein Flugereignis allein aufgrund seiner Fluginformationen eindeutig einem bestimmten Cluster zugeordnet werden kann. Die Cluster können anhand von Fluginformationen bspw. nach Jahreszeiten oder Kalendermonaten, Abflug- und Zielorten oder jeweilige Regionen, Art des Fluges (bspw. Langstrecke, Kurzstrecke, Zubringerflug), Streckenlänge, auch Großkreisentfernungen etc. gebildet werden.

Für die Zusammenfassung einzelner Flugereignisse in Cluster kann überprüft werden, ob eine in Hinblick auf Fluginformationen klar definierbare Gruppe von Flugereignissen ausreichend ähnliche Kalibrierungswerte (bspw. $B_i$ und $m_i$) aufweist, d. h. die Kalibrierungswerte der einzelnen Flugereignisse nur in einem vorgegebenen Rahmen voneinander abweichen. Ist dies der Fall, können für alle Flugereignisse dieses Clusters gemeinsame Kalibrierungswerte (bspw. $\overline{B}$ und m) ermittelt werden. Die Flugereignisse können dann in einem Cluster zusammengefasst werden, sodass für alle Flugereignisse dieses Clusters nur eine einzelne Funktion bzw. gemeinsame Kalibrierungswerte (bspw. $\overline{B}$ und m) gespeichert werden müssen. Die gemeinsamen Kalibrierungswerte (bspw. $\overline{B}$ und m) können z. B. durch Mittelwertbildung gefunden werden. Kann ein Flugereignis keiner definierbaren Gruppe zugeordnet werden, können für das entsprechende Flugereignis die zuvor bestimmten individuellen Kalibrierungswerte (bspw. $B_i$ und $m_i$) beibehalten werden.

Die gemeinsamen Kalibrierungswerte (bspw. $\overline{B}$ und m) für die einzelnen Cluster werden zusammen mit den Informationen, die eine eindeutige Zuordnung von Flugereignissen zu diesem Cluster ermöglichen, und den individuellen Kalibrierungswerten (bspw. $B_i$ und $m_i$) von Flugereignissen, die keinem Cluster zugeordnet werden können, nebst dazugehörigen Fluginformationen abgespeichert, bspw. in einer zweiten Funktions-Datenbank.

Versuche mit dem erfindungsgemäßen Verfahren haben gezeigt, dass sich individuelle Kalibrierungswerte (bspw. $B_i$ und $m_i$) von Flugereignissen bspw. anhand von Regionen und Kombination von Regionen (bspw. innereuropäische Flugereignisse zu einem Hub, die auch als Zubringerflüge bezeichnet werden können, Flugereignisse zwischen Europa und ganze Regionen auf anderen Kontinenten, wie bspw. Nordamerika) sowie in Abhängigkeit des Kalendermonats in Cluster zusammenfassen lassen. Insbesondere können auch Flugereignisse in bestimmten Regionen bzw. regionsübergreifend und in einem bestimmten Kalendermonat jedoch über mehrere Jahre hinweg in einem Cluster zusammengefasst werden, wobei dies grundsätzlich auch bei über die Jahre veränderten Marktbedingungen bspw. durch veränderten Wettbewerb möglich ist. Ebenfalls können vielfach Flugereignisse unabhängig von der Sitzplatzkapazität der eingesetzten Flugzeugmodelle in Cluster zusammengefasst werden.

Die Anzahl der so über die Kalibrierungswerte (bspw. $B_i$ und $m_i$) ermittelten und in Cluster zusammengefasste Funktionen ist gegenüber der Anzahl der Datensätze in den ursprünglichen Ticket-Daten um wenigstens eine Größenordnung, in der Regel sogar mehrere Größenordnungen kleiner. Gleichzeitig sind die ermittelten Funktionen aber - anders als im Stand der Technik - nicht nur statische Kennwerte, sondern ermöglichen umfangreiche Analysen, die im Stand der Technik auf Basis von Flugpassagier-Ticket-Massendatenbeständen - wenn überhaupt - nur mit hoher Rechnerkapazität durchgeführt werden konnten. Die Analysen auf Basis der erfindungsgemäß ermittelten Kalibrierungswerte können hingegen auch mit demgegenüber deutlich leistungsschwächeren Rechnern durchgeführt werden.

Selbstverständlich ergeben sich aufgrund der erfindungsgemäßen Kalibrierung sowie der Zusammenfassung in Cluster Vereinfachungen und Abweichungen zu den ursprünglichen Ticket-Daten, jedoch haben Untersuchungen gezeigt, dass die entsprechenden Ungenauigkeiten vernachlässigbar sind und insbesondere durch die erst durch das erfindungsgemäße Verfahren möglich gewordenen Analysemöglichkeiten mehr als wettgemacht werden.

Auch wenn es mit der beschriebenen Zusammenfassung in einzelne Cluster bereits möglich ist, eine Vielzahl von Flugereignissen zusammenzufassen, ist dies bei Flugereignissen mit deutlich unterschiedlicher Verteilung von Passagieren in den verschiedenen Buchungsklassen, bspw. "First", "Business" und "Economy", häufig nicht oder nur unter Inkaufnahme von großen Ungenauigkeiten möglich. Dabei ist unerheblich, ob die unterschiedliche Verteilung der Passagiere in die verschiedenen Buchungsklassen aufgrund unterschiedlicher Sitzplatzkonfiguration der jeweils eingesetzten Flugzeuge oder aufgrund von Schwankungen bei den Buchungen auftritt.

In einer bevorzugten Weiterbildung hat die Erfindung erkannt, dass es einen Zusammenhang zwischen dem Anteil an Passagieren in den höheren Buchungsklassen (bspw. "First" und "Business") - sog. "Normaltarifpassagiere" - an einer frei vorgegebenen fixen Anzahl Passagiere und den Einkünften in Abhängigkeit der laufenden Passagiernummer gibt und dieser Zusammenhang linear ist. Es ist daher bevorzugt, diesen linearen Zusammenhang bei der Zusammenfassung der einzelnen Flugereignisse in anhand von Fluginformationen zuordenbare Cluster zu berücksichtigen. Dadurch kann die Anzahl der für die Abbildung aller Flugereignisse benötigten Cluster weiter reduziert werden und die Anforderungen an Rechnerkapazität bei der Weiterverarbeitung weiter reduziert werden.

Um die entsprechende Zusammenfassung vornehmen zu können, ist es erforderlich, dass Informationen über die Auslastung der einzelnen Beförderungsklassen bei jedem Flugereignis zur Verfügung stehen. Die entsprechenden Informationen können jedoch ohne Weiteres ermittelt werden und bspw. in der ersten Funktions-Datenbank hinterlegt sein (siehe oben).

Die Zusammenfassung von Flugereignissen mit unterschiedlicher Auslastung der einzelnen Beförderungsklassen in anhand von Fluginformationen zuordenbare Cluster umfasst die folgenden Schritte:

> a. Ermitteln von Steigungen $j_a, j_b, \ldots$ aus Geradengleichungen für vorgegebene Passagiernummern $a, b, \ldots,$ die einen Zusammenhang zwischen der Anzahl der Normaltarifpassagiere $n$ bzw. dem Anteil der Normaltarifpassagiere an einer frei vorgegebenen fixen Anzahl Passagiere und den Einkünften der zusammenzufassenden Flugereignisse für die vorgegebenen Passagiernummern $a, b, \ldots$ wiedergeben, wobei die Einkünfte für die vorgegebenen Passagiernummern $a, b, \ldots$ in Abhängigkeit der Anzahl der Normaltarifpassagiere $n$ oder des Anteils der Normaltarifpassagiere an der frei vorgegebenen fixen Anzahl Passagiere durch das Lösen der Funktionen $Y_i(X)$ für die jeweiligen Flugereignisse ermittelt werden, und wobei die Anzahl der vorgegebenen Passagiernummern $a, b, \ldots$ und die Anzahl der Geradengleichungen jeweils der Anzahl der Kalibrierungsparameter der Funktionen $Y_i(X)$ entspricht; und
> b. Ermitteln von gemeinsamen Kalibrierungswerten für eine vorgegebene Anzahl an Normaltarifpassagieren $\bar{n}$ oder einen Anteil an Normaltarifpassagieren an der frei vorgegebenen fixen Anzahl Passagiere.

Für die Zusammenfassung von Flugereignissen mit unterschiedlicher Auslastung der einzelnen Beförderungsklassen in anhand von Fluginformationen zuordenbare Cluster werden also zunächst die Funktionen $Y_i(X)$ für die betroffenen Flugereignisse jeweils für vorgegebene Passagiernummern $a, b, \ldots$ gelöst und die dabei erzielten Ergebnisse (also die Einkünfte) in Abhängigkeit der Anzahl der Normaltarifpassagiere $n$ oder des Anteils der Normaltarifpassagiere an einer frei vorgegebenen fixen Anzahl Passagiere des jeweiligen Flugereignisses ermittelt. Für die vorgegebenen Passagiernummern $a, b, \ldots$ können dann jeweils Geradengleichungen ermittelt werden, die einen Zusammenhang zwischen der Anzahl der Normaltarifpassagiere $n$ bzw. dem Anteil der Normaltarifpassagiere an der frei vorgegebenen fixen Anzahl Passagiere und den Einkünften für die vorgegebenen Passagiernummern $a, b, \ldots$ darstellen. Aus den Geradengleichungen lassen sich die Steigung der Geraden $j_a, j_b, \ldots$ ermitteln. Die Steigungen $j_a, j_b, \ldots$ können bspw. als Parameter für das entsprechende Cluster bspw. in der zweiten Funktions-Datenbank abgelegt werden. Werden die Steigungen der Geraden $j_a, j_b, \ldots$ auf Basis des Anteils der Normaltarifpassagiere an der frei vorgegebenen fixen Anzahl Passagiere ermittelt, können die Steigungen $j_a, j_b, \ldots$ auch identisch sein.

Die gemeinsamen Kalibrierungswerte (bspw. $\bar{B}$ und $\bar{m}$) können identisch zu den Kalibrierungsparametern (bspw. $B_i$ und $m_i$) eines bestimmten Flugereignisses des Clusters sein. Die dazugehörige Anzahl an Normaltarifpassagieren $\bar{n}$ entspricht dann der Anzahl der Normaltarifpassagiere $n_i$ des entsprechenden Flugereignisses. Es können aber ggf. auch Mittelwerte o.ä. gebildet werden.

Sind für ein Cluster neben den gemeinsamen Kalibrierungswerten (bspw. $\bar{B}$ und $\bar{m}$) auch noch die beschriebenen Steigungen $j_a, j_b, \ldots$ sowie die dazugehörige Anzahl an Normaltarifpassagieren $n$ oder deren Anteil an der frei vorgegebenen fixen Anzahl Passagiere verfügbar, können die Kalibrierungsparameter (bspw. $B_i$ und $m_i$) für einzelne Flugereignisse mithilfe der Steigungen $j_a, j_b, \ldots$ für die bekannten Passagiernummern $a, b, \ldots$ in Abhängigkeit der Abweichung von der vorgegebenen Anzahl der Normaltarifpassagiere $\bar{n}$ oder deren Anteil an der frei vorgegebenen fixen Anzahl Passagiere derart angepasst werden, dass die daraus resultierende Funktion das jeweilige Flugereignis ausreichend genau wiedergibt.

Am Beispiel der bevorzugten Funktion $Y_i(X) = A_i \times X^{m_i}$ kann dies verdeutlich werden. Dabei wird mit den gemeinsamen Kalibrierungswerten $\bar{B}$ **und** $\bar{m}$ die Funktion $Y(X) = A \times X^m$ für die Passagiernummern $a,b$ gelöst, sodass sich ergibt:

$$\bar{Y}(a) = 10^{\bar{B}} \times a^{\bar{m}} \qquad\qquad (\text{Gl. 5})$$

und

$$\bar{Y}(b) = 10^{\bar{B}} \times b^{\bar{m}}. \qquad\qquad (\text{Gl. 6})$$

Für einen beliebigen Flug mit bekannter Anzahl an Normaltarifpassagieren $n_i$ aus dem entsprechenden Cluster lässt sich die individuelle Funktion $Y_i$ dieses Flugereignisses bzw. deren Kalibrierungsparameter $B_i$ und $m_i$ ohne Weiteres ermitteln aus

$$Y_i(a) = 10^{B_i} \times a^{m_i} = \bar{Y}(a) + j_a \times (n_i - \bar{n}) \qquad (\text{Gl. 7})$$

und

$$Y_i(b) = 10^{B_i} \times b^{m_i} = \bar{Y}(b) + j_b \times (n_i - \bar{n}). \qquad (\text{Gl. 8})$$

Dadurch wird ermöglicht, dass auch Flugereignisse, die aufgrund von Gemeinsamkeiten in den Fluginformationen grundsätzlich in anhand von Fluginformationen zuordenbare Cluster zusammengefasst werden können, auch trotz deutlich unterschiedlicher Kalibrierungsparameter aufgrund unterschiedlicher Anzahl von Normaltarifpassagieren bzw. Anteil von Normaltarifpassagieren an der frei vorgegebenen fixen Anzahl Passagiere auch tatsächlich in ein Cluster zusammengefasst werden können.

Es ist bevorzugt, wenn der Durchschnittswert der Anzahl der Normaltarifpassagiere oder deren Anteil an der frei vorgegebenen fixen Anzahl Passagiere für alle Flugereignisse eines Clusters ermittelt wird. Vorzugsweise kann auch die Standardabweichung der Anzahl der Normaltarifpassagiere bzw. des Anteils der Normaltarifpassagiere an der frei vorgegebenen fixen Anzahl Passagiere von der jeweiligen Gerade ermittelt werden.

Indem eine entsprechend erweiterte Zusammenfassung von Flugereignissen möglich ist, sinkt die Anzahl der erforderlichen Cluster, um alle Flugereignisse gemäß den anfänglichen Ticket-Daten abzubilden. Entsprechend sinkt die Anzahl der, bspw. in einer zweiten Funktionsdatenbank zu speichernden Datensätze, die die Informationen über die einzelnen Cluster enthalten. Untersuchungen haben gezeigt, dass gegenüber von ca. 12,6 Mio. Ticket-Daten(sätzen) aus dem ersten Verfahrensschritt die Anzahl der Datensätze auf bis zu ca. 2 Tsd. reduziert werden kann. Dabei sind die resultierenden Datensätze anders als im Stand der Technik jedoch nicht auf statische Kennzahlen beschränkt, sondern bieten die Möglichkeit, detaillierte Analysen von mehreren anhand von Fluginformationen zusammenfassbaren Flugereignissen aber auch einzelner Flugereignisse mit ausreichender Genauigkeit durchzuführen. Aufgrund der vergleichsweise geringen Anzahl an Datensätzen können entsprechende Analysen dabei auch mithilfe leistungsschwächerer Rechner durchgeführt werden. Sofern im Stand der Technik entsprechende Analysen überhaupt möglich waren, hätten diese äußerst leistungsstarke Rechner und einen enormen Zeitaufwand benötigt, um die im Stand der Technik allein vorliegende deutlich höhere Anzahl an ursprünglichen Ticket-Daten zu bewältigen.

Ein zusätzlicher Bonuseffekt entsteht durch die beschriebene erweiterte Zusammenfassung von Flugereignissen in anhand von Fluginformationen zuordenbare Cluster darin, dass bspw. auch Veränderungen der Flugzeuggröße von auf einer Strecke eingesetzten Flugzeugmodellen oder verschiedenen Sitzplatzkonfigurationen im Vorhinein projiziert und abgeschätzt werden können. So gewonnene Informationen können bei der Flottenplanung oder bei der Flugplanerstellung durch eine Fluggesellschaft, aber auch bei einem Flugzeugneuentwurf durch einen Flugzeughersteller berücksichtigt werden.

Auch ermöglicht das erfindungsgemäße Verfahren bei der Flottenplanung sowie beim Entwurf neuer Flugzeuge, eine möglichst optimale Auslastung insbesondere der höheren Buchungsklassen (bspw. "First" und "Business") durch die Normaltarifpassagiere sicherzustellen. Dadurch kann die Gefahr deutlich reduziert werden, dass Sitzplätze in den höheren Buchungsklassen dauerhaft nicht benutzt und ständig als Leergewicht in einem Flugzeug mitgeführt müssen, was letztendlich auch den Treibstoffverbrauch unnötig erhöhen würde.

Die optimale Anzahl an Sitzplätzen für Normaltarifpassagiere in einem anhand von Fluginformationen zuordenbaren Cluster - d. h. diejenige Anzahl, die eine optimale Auslastung gewährleistet - wird bevorzugt durch die Addition der durchschnittlichen Anzahl der Normaltarifpassagiere bzw. des Anteils der Normaltarifpassagiere an der frei vorgegebenen fixen Anzahl Passagiere eines Clusters und der zweifachen Standardabweichung der Anzahl der Normaltarifpassagiere bzw. des Anteils der Normaltarifpassagiere an der frei vorgegebenen fixen Anzahl Passagiere desselben Clusters ermittelt. Mit einer so ermittelten optimalen Anzahl an Sitzplätzen für Normaltarifpassagiere kann die Auslastung der entsprechenden Sitze in einem Cluster optimiert werden, sodass das mitzuführende Leergewicht auf den dem Cluster zuordenbare Flugereignissen in der Summe minimal ist und entsprechend Treibstoff eingespart werden kann. Das Verfahren zur Optimierung der Auslastung der Sitzplätze und damit letztendlich zur dauerhaften Senkung des Treibstoffverbrauchs verdient ggf. gesondert Schutz.

Das erfindungsgemäße Computerprogrammprodukt dient dem Ausführen des erfindungsgemäßen Verfahrens. Es wird daher auf die vorstehenden Ausführungen verwiesen. Das Computerprogrammprodukt kann in Form einer Diskette, einer DVD (Digital Versatile Disc), einer CD (Compact Disc), einem Memorystick oder einem sonstigen beliebigen Speichermedium vorliegen.

Die Erfindung wird nun anhand eines vorteilhaften Ausführungsbeispiels unter Bezugnahme auf die beigefügten Zeichnungen weiter beschrieben. Es zeigen:

Figur 1: eine schematische Darstellung des erfindungsgemäßen Verfahrens;

Figur 2: ein Auszug aus einer Ticket-Coupon-Datenbank;

Figur 3: ein Diagramm der Ticket-Einkünfte in Abhängigkeit der laufenden Passagiernummer;

Figur 4: ein Diagramm der kumulierten Einkünfte in Abhängigkeit der laufenden Passagiernummer;

Figur 5: ein Diagramm der durchschnittlichen Einkünfte in Abhängigkeit der laufenden Passagiernummer;

Figur 6: ein Auszug aus einer ersten Funktions-Datenbank;

Figur 7: ein Diagramm der durchschnittlichen Einkünfte verschiedener Flugereignisse für zwei vorgegebene Passagiernummern;

Figur 8: ein Auszug aus einer zweiten Funktions-Datenbank; und

Figur 9: ein Diagramm der Veranschaulichung der Ermittlung von Informationen zu bestimmten Flugereignissen.

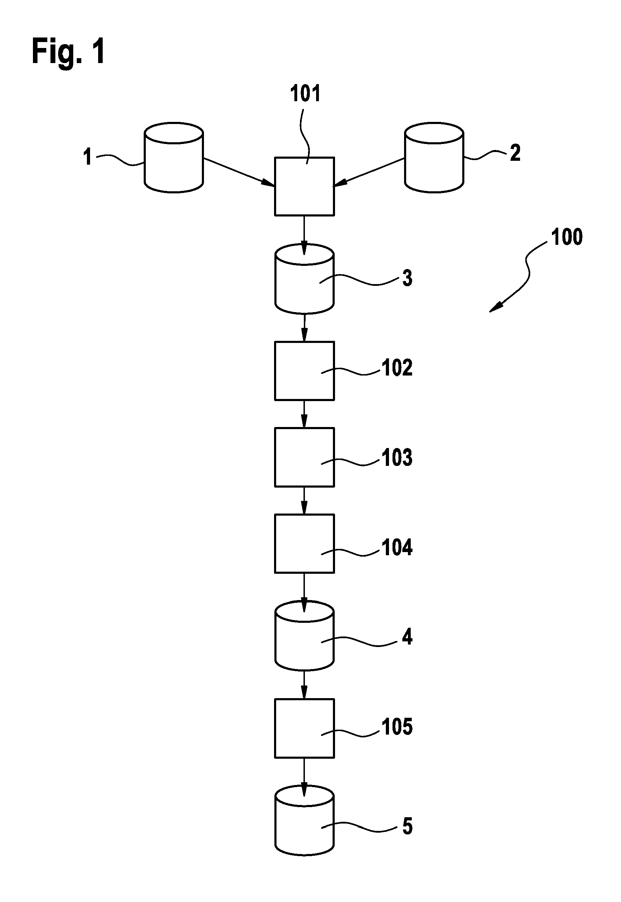

In Figur 1 ist das erfindungsgemäße Verfahren 100 schematisch dargestellt. In einem ersten Schritt 101 werden die in einem ersten Datenspeicher 1 abgelegten Ticket-Daten und in einem zweiten Datenspeicher 2 abgelegten Flugplaninformationen zu einer Ticket-Coupon-Datenbank 13 zusammengefasst und in einem dritten Datenspeicher 3 abgelegt.

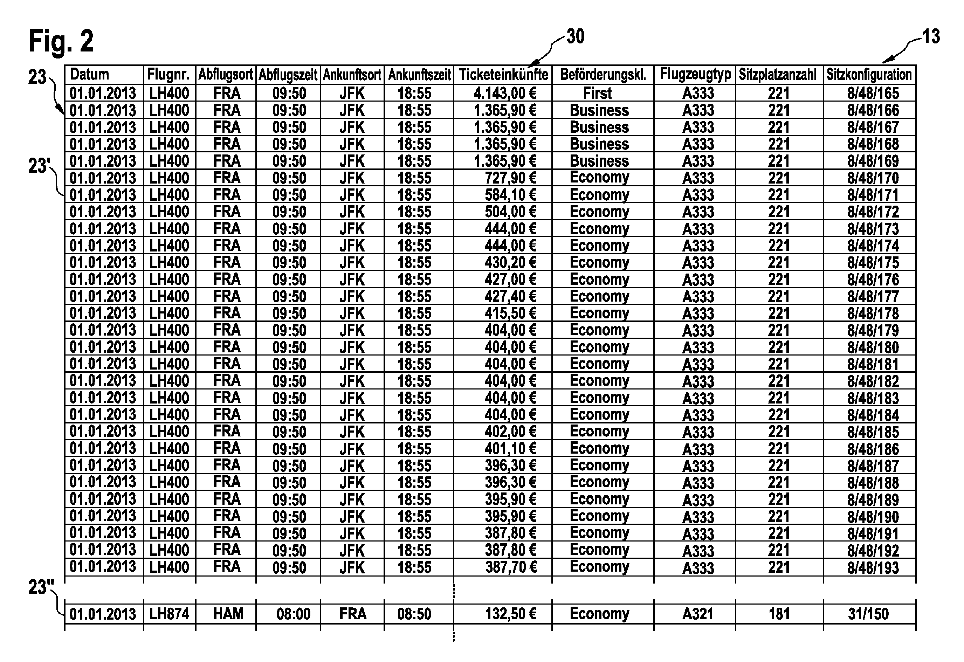

In Figur 2 ist ein Auszug aus einer Ticket-Coupon-Datenbank 13 dargestellt. Für jeden einzelnen Ticket-Coupon 23 liegt ein separater Datensatz vor, der Informationen über

- Datum des Flugereignisses,
- die Flugnummer,
- den Abflugsort,
- die Abflugszeit,
- den Ankunftsort,
- die Ankunftszeit,
- die Ticketeinkünfte 30 für den Ticket-Coupon,
- die Beförderungsklasse,
- den Flugzeugtyp, mit dem der Flug tatsächlich durchgeführt wurde,

- die Sitzplatzanzahl des Flugzeuges, mit dem der Flug tatsächlich durchgeführt wurde, sowie
- die Sitzkonfiguration des Flugzeuges, mit dem der Flug tatsächlich durchgeführt wurde.

Die Informationen "Datum des Flugereignisses", "Flugnummer", "Abflugsort", "Abflugszeit", "Ankunftsort" und "Ankunftszeit" sind sowohl in den Ticket-Daten und in den Flugplaninformationen enthalten und dienen der eindeutigen Verknüpfung der Flugplaninformationen mit den Ticket-Daten. Die Informationen "Ticketeinkünfte" sowie "Beförderungsklasse" in der Ticket-Coupon-Datenbank 13 stammen aus den Ticket-Daten, die Informationen über "Flugzeugtyp", "Sitzplatzanzahl" und "Sitzkonfiguration" aus den Flugplaninformationen enthalten.

In der Ticket-Coupon-Datenbank 13 sind ausschließlich Einzelflugstrecken enthalten. Umfasst ein Ticket aus den Ticket-Daten mehrere Teilstrecken, so wird das entsprechende Ticket in mehrere Ticket-Coupons 23 aufgespalten, sodass für jede Teilstrecke ein separater Ticket-Coupon 23 vorliegt. Im dargestellten Beispiel bilden die Ticket-Coupons 23' und 23'' die beiden Teilstrecken eines Tickets aus der Ticket-Datenbank für die Gesamtflugstrecke Hamburg (HAM) - New York, Flughafen John F. Kennedy (JFK) mit Umstieg in Frankfurt (FRA).

Im nachfolgenden Schritt 102 wird sichergestellt, dass in der Ticket-Coupon-Datenbank 13 die Ticket-Coupons 23 jedes einzelnen Flugereignisses nach einem vorgegebenen Kriterium sortiert sind, nämlich in absteigender Reihenfolge gemäß der Ticketeinkünfte 30 jedes Ticket-Coupons 23 für das entsprechende Flugereignis. Im dargestellten Beispiel werden dafür die Ticket-Coupons 23 eines einzelnen Flugereignisses einem Sortieralgorithmus - bspw. einem Bubblesort-Algorithmus, zugeführt, der die Ticket-Coupons 23 entsprechend sortiert. Der Sortieralgorithmus bricht ab, sobald die Ticket-Coupons 23 in der richtigen Reihenfolge vorliegen. Sind die Ticket-Daten 23 für ein Flugereignis bereits sortiert, wenn sie dem Sortieralgorithmus zugeführt werden, bricht dieser bereits nach einem einzigen Durchlauf ab.

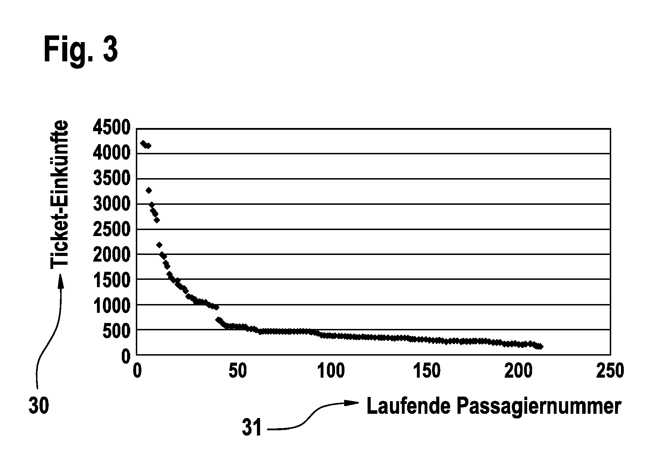

In Figur 3 sind in einem Beispiel die Ticket-Einkünfte 30 der sortierten Ticket-Coupons 23 über die laufende Passagiernummer 31 für ein einzelnes Flugereignis dargestellt, wobei die Passagiernummer 31 fortlaufend von 1 bis zur Anzahl der Ticket-Coupons 23 für das jeweilige Flugereignis läuft.

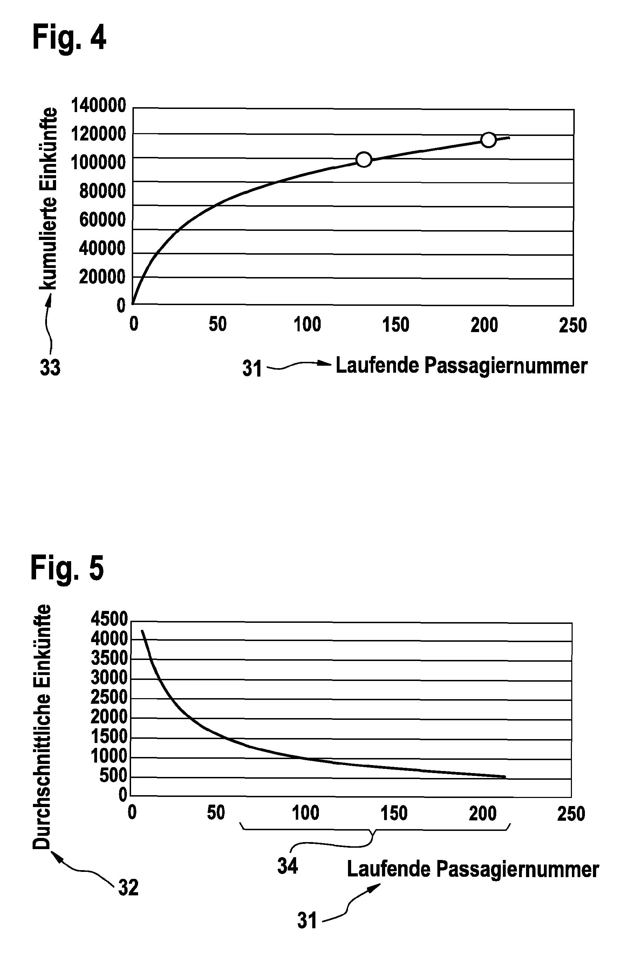

In Schritt 103 werden die durchschnittlichen Einkünfte 32 für jedes Flugereignis in Abhängigkeit der laufenden Passagiernummer 31 ermittelt. Dazu werden in einem Zwischenschritt zunächst die kumulierten Einkünfte 33 in Abhängigkeit der laufenden Passagiernummer 31 berechnet, indem die Ticket-Einkünfte 30 der sortierten Ticket-Coupons 23 der Reihe nach ausgehend von dem ersten Ticket-Coupon aufsummiert und entsprechend der Anzahl der aufsummierten Ticket-Coupons 23 - die der laufenden Passagiernummer 31 entspricht - ermittelt werden. Das Ergebnis dieses Zwischenschritts für das Flugereignis aus Figur 3 ist in Figur 4 dargestellt.

Anschließend werden die einzelnen kumulierten Einkünfte 33 durch die jeweils zugehörige laufende Passagiernummer 31 geteilt, um so die durchschnittlichen Einkünfte 32 in Abhängigkeit der laufenden Passagiernummer 31 zu erhalten. Die durchschnittlichen Einkünfte 32 für das Flugereignis aus Figuren 3 und 4 sind in Figur 5 in einem Beispiel dargestellt.

Ausgehend von den in Figur 5 in einem Beispiel dargestellten durchschnittlichen Einkünften 32 in Abhängigkeit der laufenden Passagiernummer 31 wird in Schritt 104 für jedes Flugereignis die Funktion

$$Y_i(X) = A_i \times X^{m_i} \qquad \text{(Gl. 1)}$$

kalibriert. Bei dieser Funktion steht der Index i für das jeweilige einzelne Flugereignis, $Y_i$ für die durchschnittlichen Einkünfte und $X$ für die laufende Passagiernummer. Zur Kalibrierung werden die Kalibrierungsparameter $A_i$ und $m_i$ der Funktion so optimiert, dass die Abweichungen von den im vorhergehenden Schritt 103 ermittelten durchschnittlichen Einkünften 32 in Abhängigkeit der laufenden Passagiernummer 31 für jedes Flugereignis möglichst gering sind. Die Kalibrierung wird dabei lediglich anhand von 70 % der laufenden Passagiernummern 31, und zwar derjenigen 70 % mit den höchsten Passagiernummern 31 vorgenommen. Der entsprechende Anteil ist in Figur 5 als Bereich 34 angedeutet.

Um die erforderliche Kalibrierung möglichst ressourcensparend durchzuführen, ist es bevorzugt, die oben genannte Funktion logarithmiert zu verwenden, nämlich als Geradengleichung

$$Y_i^* = m_i \times \log X + \log A_i \qquad \text{(Gl. 2)}$$

bzw.

$$Y_i^* = m_i \times \log X + B_i \quad \text{mit} \quad B_i = \log A_i. \qquad \text{(Gl. 3)}$$

Die letztgenannte Geradengleichung kann mithilfe der im vorhergehenden Schritt ermittelten durchschnittlichen Einkünfte 32 in Abhängigkeit der laufenden Passagiernummer 31 für jedes Flugereignis einfach und ressourcensparend kalibriert werden, wobei die Optimierung insbesondere die Maximierung des Bestimmheitsmaßes $R^2$ der Geradengleichung zum Ziel haben kann. Der Parameter $A_i$ ergibt sich aus

$$A_i = 10^{B_i}. \qquad \text{(Gl. 4)}$$

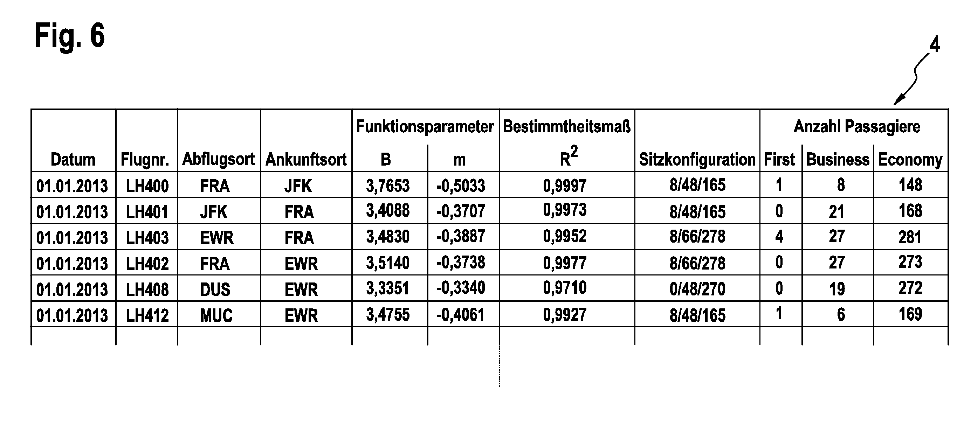

Die entsprechend für jedes Flugereignis, für das Ticket-Daten in der Datenbank 1 vorhanden sind, kalibrierten Funktionen werden in Form ihrer Kalibrierungsparameter $\boldsymbol{B_i}$ und $\boldsymbol{m_i}$ in einer ersten Funktionsdatenbank 4 abgelegt. Neben den Kalibrierungsparametern $\boldsymbol{B_i}$ und $\boldsymbol{m_i}$ sind in der ersten Funktionsdatenbank 4 noch Fluginformationen zu dem jeweiligen Flugereignis hinterlegt. Auch sind die Anzahl der Passagiere aufgeteilt nach Klassen in der ersten Funktionsdatenbank 4 abgelegt. In Figur 6 ist in einem Beispiel ein Auszug aus einer entsprechenden ersten Funktionsdatenbank 4 dargestellt.

Indem für jedes Flugereignis in der ersten Funktionsdatenbank 4 lediglich ein Datensatz für jedes Flugereignis abgelegt ist, ist die Anzahl der Datensätze in dieser Datenbank gegenüber den Datenbanken 1 und 3 mit Ticket-Daten und Ticket-Coupon-Daten 13 für jedes einzelne Ticket jedes einzelnen Flugereignisses bereits deutlich reduziert.

In einem weiteren Schritt 105 werden die einzelnen Datensätze aus der ersten Funktionsdatenbank 4 in einzelne anhand von Fluginformationen zuordenbare Cluster zusammengefasst. So können bspw. die in Figur 6 angegebenen Flüge zwischen Frankfurt (FRA) und Nordamerika bzw. den beiden New Yorker Flughäfen John F. Kennedy (JFK) und Newark (EWR) zu einem Cluster zusammengefasst werden, der dann für alle Flüge zwischen Frankfurt und Nordamerika bzw. New York gültig ist. Der Cluster kann dabei weiterhin auf Flüge im Januar eines Jahres beschränkt sein.

Neben den in Figur 6 angegebenen Flügen zwischen Frankfurt und New York ist selbstverständlich noch eine Vielzahl weiterer Flüge in der ersten Funktionsdatenbank 4 enthalten, die zu dem genannten Cluster "Frankfurt-New York im Januar" (bzw. "Frankfurt-Nordamerika im Januar") gehören. Die Flugzeuggröße oder die Sitzplatzkonfiguration sind im dargestellten Beispiel allerdings kein Kriterium für die Bildung eines Clusters.

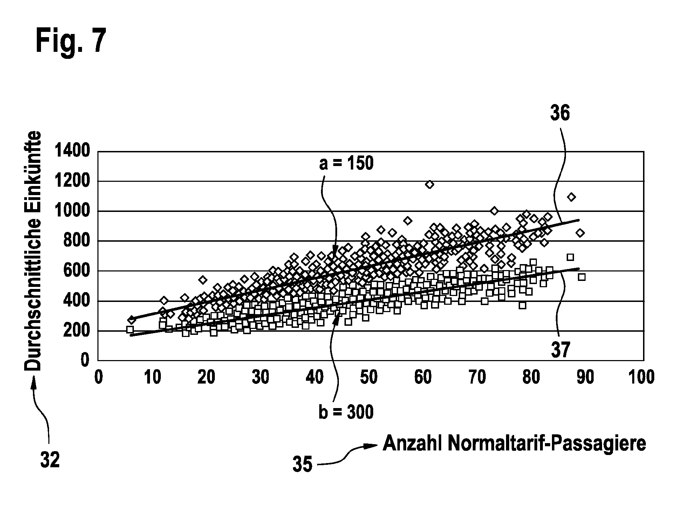

Für die Zusammenfassung der entsprechenden Flugereignisse eines Clusters werden zunächst für zwei vorgegebene Passagiernummern $\boldsymbol{a,b}$ mithilfe der jeweiligen Kalibrierungsparameter $\boldsymbol{B_i}$ und $\boldsymbol{m_i}$ und der oben genannten Funktion die durchschnittlichen Einkünfte berechnet. In Figur 7 sind die so berechneten durchschnittlichen Einkünfte für die Passagiernummern $\boldsymbol{a = 150}$ und $\boldsymbol{b = 300}$ dargestellt, wobei die durchschnittlichen Einkünfte über die Anzahl der Normaltarifpassagiere - d. h. der Passagiere in den Buchungsklassen "First" und "Business" - für das jeweils entsprechende Flugereignis dargestellt ist. Die Anzahl der Normaltarifpassagiere kann der ersten Funktionsdatenbank 4 entnommen werden (vgl. Figur 6, "Anzahl der Passagiere").

Für jede der vorgegebenen Passagiernummern $\boldsymbol{a,b}$ lässt sich jeweils eine Gerade 36, 37 mit jeweiliger Steigung $\boldsymbol{j_a}, \boldsymbol{j_b}$ annähern. Außerdem werden in diesem Schritt gemeinsame Kalibrierungsparameter $\overline{\boldsymbol{B}}$ und $\boldsymbol{m}$ sowie eine dazugehörige Anzahl an Normaltarifpassagieren $\overline{n}$ ermittelt. Bei diesen Werten kann es sich bspw. um die Kalibrierungsparameter und die Anzahl der Normaltarifpassagiere eines bestimmten Flugereignisses des Clusters handeln.

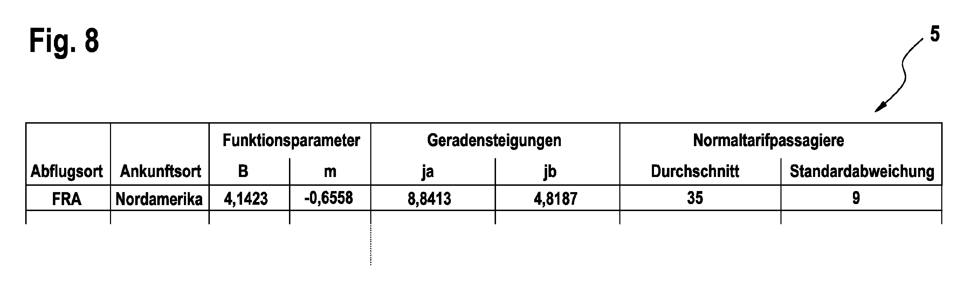

Weiterhin lassen sich für die Flugereignisse des jeweiligen Clusters ein Durchschnittwert und die Standardabweichung der Anzahl beförderter Normaltarifpassagiere ermitteln. Die entsprechenden Informationen können in einer zweiten Funktionsdatenbank 5 abgelegt werden, wie sie in einem Beispiel in Figur 8 dargestellt sind.

Aus den Informationen über die gemeinsamen Kalibrierungswerte $\overline{\boldsymbol{B}}$ und $\overline{\boldsymbol{m}}$, der dazugehörigen Anzahl der Normaltarifpassagiere $\overline{n}$ sowie den Steigungen $\boldsymbol{j_a}, \boldsymbol{j_b}$ für ein Cluster, können die individuellen Kalibrierungsparameter $\boldsymbol{B_i}$ und $\boldsymbol{m_i}$ für einzelne Flugereignisse aus diesem Cluster ermittelt werden, und zwar in Abhängigkeit der Anzahl der Normaltarifpassagiere des einzelnen Flugereignisses.

Dazu kann bspw. mit den gemeinsamen Kalibrierungswerten $\overline{\boldsymbol{B}}$ und $m$ die Funktion $\boldsymbol{Y(X) = A \times X^m}$ für die Passagiernummern $\boldsymbol{a, b}$ gelöst werden, sodass sich ergibt:

$$\overline{Y}(a) = 10^{\overline{B}} \times a^{\overline{m}} \qquad \text{(Gl. 5)}$$

und

$$\bar{Y}(b) = 10^{\bar{B}} \times b^{\bar{m}}. \qquad\qquad (\text{Gl. } 6)$$

Für einen beliebigen Flug mit bekannter Anzahl an Normaltarifpassagieren $n_i$ aus dem entsprechenden Cluster lässt sich die individuelle Funktion $Y_i$ dieses Flugereignisses bzw. deren Kalibrierungsparameter $B_i$ und $m_i$ dann ohne Weiteres ermitteln aus

$$Y_i(a) = 10^{B_i} \times a^{m_i} = \bar{Y}(a) + j_a \times (n_i - \bar{n}) \qquad\qquad (\text{Gl. } 7)$$

und

$$Y_i(b) = 10^{B_i} \times b^{m_i} = \bar{Y}(b) + j_b \times (n_i - \bar{n}). \qquad\qquad (\text{Gl. } 8)$$

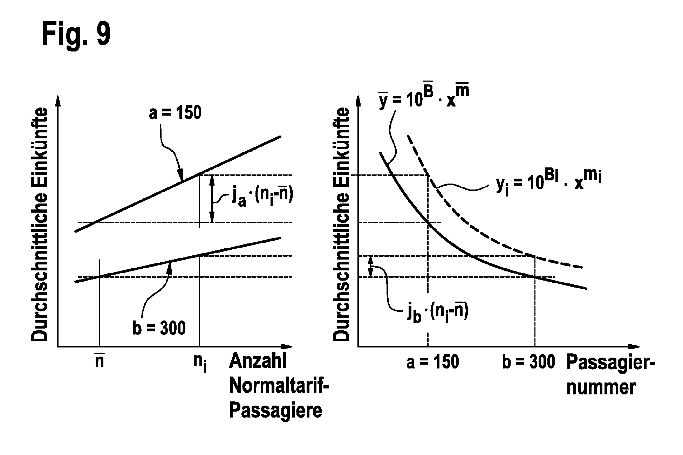

In Figur 9 ist diese Vorgehensweise zur Ermittlung der individuellen Kalibrierungsparameter $B_i$ und $m_i$ eines bestimmten Flugereignisses nochmals grafisch veranschaulicht. Ausgehend von den Steigungen $j_a, j_b$ für zwei vorgegebene Passagiernummern $a = 150$ und $b = 300$ kann für diese beiden Passagiernummern $a, b$ jeweils eine Abweichung von der bekannten Funktion ($\bar{Y}$) mit gemeinsamen Kalibrierungswerten $\bar{B}$ und $\bar{m}$ eine "Verschiebung" der Funktion ($Y_i$) und die dabei geänderten Kalibrierungsparameter $B_i$ und $m_i$ ermittelt werden, die von der tatsächlichen Anzahl der Normaltarifpassagiere $n_i$ des jeweiligen Flugereignisses abhängen.

Durch die beschriebene Zusammenfassung ist es möglich, die Anzahl der Datensätze in der zweiten Funktionsdatenbank 5 gegenüber der ersten Funktionsdatenbank 4 noch weiter zu reduzieren.

Im Ergebnis wird durch das erfindungsgemäße Verfahren eine zweite Funktionsdatenbank 5 geschaffen, die alle Flugereignisse, die in den anfänglichen Ticket-Daten enthalten sind, mit ausreichender Genauigkeit abbilden kann, im Gegensatz dazu aber eine um Größenordnungen kleinere Anzahl an Datensätzen erhält. Aufgrund dieser deutlich verringerten Größe lässt sich die zweite Funktionsdatenbank 5 auch durch leistungsschwächere Rechner auswerten. Als zusätzlichen Bonuseffekt lassen sich auch aus der so ermittelten zweiten Funktionsdatenbank 5 Informationen ableiten und Voraussagen treffen, wie es im Stand der Technik nicht möglich war.

**Patentansprüche**

1.  Verfahren zur Analyse von Flugpassagier-Ticket-Massendatenbeständen mit den Schritten:

    a. Verknüpfen von Ticket-Daten mit Flugplaninformationen zur Bildung einer Datenbank (13) umfassend Ticket-Coupon-Daten (23) für jedes Flugereignis;
    b. Sicherstellen, dass die einzelnen Ticket-Coupons (23) für jedes Flugereignis entsprechend der jeweiligen Ticket-Coupon-Einkünfte in einer vorgegebenen Reihenfolge sortiert sind;
    c. Ermitteln der Einkünfte (32, 33) für jedes Flugereignis in Abhängigkeit der Anzahl der laufenden Passagiernummer (31) entsprechend der sortierten Ticket-Coupons (23);
    d. Ermitteln von Kalibrierungsparametern einer Funktion $Y_i(X)$ für jedes einzelne Flugereignis $i$, wobei $Y_i$ für die Einkünfte und $X$ für die laufende Passagiernummer steht, wobei die Kalibrierung der Funktion $Y_i(X)$ anhand der ermittelten Einkünfte (32, 33) in Abhängigkeit der laufenden Passagiernummer (31) derart erfolgt, dass die Abweichungen der Funktionswerte $Y_i$ von den ermittelte Einkünften möglichst gering sind; und
    e. Zusammenfassen mehrerer kalibrierter Funktionen in anhand von Fluginformationen zuordenbare Cluster.

2.  Verfahren nach Anspruch 1,
    **dadurch gekennzeichnet, dass**
    sichergestellt wird, dass die einzelnen Ticket-Coupons (23) für jedes Flugereignis entsprechend der jeweiligen Ticket-Coupon-Einkünfte in absteigender oder aufsteigender Reihenfolge sortiert sind.

3. Verfahren nach einem der vorhergehenden Ansprüche,
**dadurch gekennzeichnet, dass**
es sich bei den zu ermittelnden Einkünften um kumulierte oder durchschnittliche Einkünfte handelt.

4. Verfahren nach einem der vorhergehenden Ansprüche,
**dadurch gekennzeichnet, dass**
der Bereich der Funktion $Y_i(X)$ für Passagiernummern $X$, für die Einkünfte ermittelt wurden, monoton steigend oder monoton fallend ist.

5. Verfahren nach einem der vorhergehenden Ansprüche,
**dadurch gekennzeichnet, dass**
die Anzahl der Kalibrierungsparameter der Funktion $Y_i(X)$ kleiner gleich 10, vorzugsweise kleiner gleich 5, vorzugsweise kleiner gleich 3 ist.

6. Verfahren nach einem der vorhergehenden Ansprüche,
**dadurch gekennzeichnet, dass**
die Funktion $Y_i(X)$ lautet:

$$Y_i(X) = A_i \times X^{m_i}$$

mit Kalibrierungsparametern $A_i$ und $m_i$.

7. Verfahren nach Anspruch 1,
**dadurch gekennzeichnet, dass**
vor oder bei dem Verknüpfen der Ticket-Daten mit Flugplaninformationen die Ticket-Daten für eine Flugverbindung mit mehreren Teilstrecken in mehrere Teilstrecken-Ticket-Daten jeweils betreffend eine der Teilstrecken, aufgeteilt werden.

8. Verfahren nach einem der vorhergehenden Ansprüche,
**dadurch gekennzeichnet, dass**
zur Sicherstellung der vorgegebenen Reihenfolge der Ticket-Coupons (23) ein Sortieralgorithmus angewendet wird, der vorzugsweise bei Feststellung der vollständigen Sortierung abbricht.

9. Verfahren nach einem der Ansprüche 3 bis 8,
**dadurch gekennzeichnet, dass**
die durchschnittliche Einkünfte (32) in Abhängigkeit der laufenden Passagiernummer (31) durch die folgenden Schritte ermittelt werden:

  a. Ermitteln der kumulierten Einkünften (33) in Abhängigkeit der laufenden Passagiernummer (31);
  b. Division der kumulierten Einkünfte (33) durch die dazugehörige laufende Passagiernummer (31).

10. Verfahren nach einem der Ansprüche 6 bis 10,
**dadurch gekennzeichnet, dass**
für die Kalibrierung die Funktion $Y_i(X) = A_i \times X^{m_i}$ logarithmiert wird.

11. Verfahren nach einem der vorhergehenden Ansprüche,
**dadurch gekennzeichnet, dass**
die Kalibrierung lediglich anhand eines vorbestimmten Bereichs des sich ergebenden Verlaufs der Einkünfte (32, 33) erfolgt, vorzugsweise anhand eines zusammenhängenden Anteils (34) der laufenden Passagiernummer (31), wobei der Anteil (34) der zur Kalibrierung heranzuziehenden laufenden Passagiernummer (31) vorzugsweise 60-80 %, weiter vorzugsweise 70 % beträgt.

12. Verfahren nach einem der vorhergehenden Ansprüche,
**dadurch gekennzeichnet, dass**

für jedes Flugereignis Werte über die Auslastung der einzelnen Beförderungsklassen ermittelt werden.

13. Verfahren nach einem der vorhergehenden Ansprüche,
**dadurch gekennzeichnet, dass**
für die Zusammenfassung einzelner Flugereignisse in Cluster überprüft wird, ob eine in Hinblick auf Fluginformationen klar definierbare Gruppe von Flugereignissen ausreichend ähnliche Kalibrierungswerte aufweisen, und, wenn dies der Fall ist, für alle Flugereignisse dieses Clusters gemeinsame Kalibrierungswerte ermittelt werden.

14. Verfahren nach einem der vorhergehenden Ansprüche,
**dadurch gekennzeichnet, dass**
die Zusammenfassung von Flugereignissen mit unterschiedlicher Auslastung der einzelnen Beförderungsklassen in anhand von Fluginformationen zuordenbare Cluster die Schritten umfasst:

a. Ermitteln von Steigung $j_a, j_b, ...$ aus Geradengleichungen für vorgegebene Passagiernummern $a, b, ...$, die einen Zusammenhang zwischen der Anzahl der Normaltarifpassagiere $n$ bzw. dem Anteil der Normaltarifpassagiere an einer frei vorgegebenen fixen Anzahl Passagiere und den Einkünften der zusammenzufassenden Flugereignisse für vorgegebene Passagiernummern $a, b, ...$ wiedergeben, wobei die Einkünfte für die vorgegebenen Passagiernummern $a, b, ...$ in Abhängigkeit der Anzahl der Normaltarifpassagiere $n$ oder des Anteils der Normaltarifpassagiere an der frei vorgegebenen fixen Anzahl Passagiere durch das Lösen der Funktionen $Y_i(X)$ für die jeweiligen Flugereignisse ermittelt werden, und wobei die Anzahl der vorgegebenen Passagiernummern $a, b, ...$ und die Anzahl der Geradengleichungen jeweils der Anzahl der Kalibrierungsparameter der Funktionen $Y_i(X)$ entspricht;
b. Ermitteln von gemeinsamen Kalibrierungswerten für eine vorgegebene Anzahl an Normaltarifpassagieren $\bar{n}$ oder einen Anteil an Normaltarifpassagieren an der frei vorgegebenen fixen Anzahl Passagiere.

15. Verfahren nach einem der vorhergehenden Ansprüche,
**dadurch gekennzeichnet, dass**
der Durchschnittswert und vorzugsweise die Standardabweichung der Anzahl der Normaltarifpassagiere oder deren Anteil an einer frei vorgegebenen fixen Anzahl Passagiere für alle Flugereignisse eines Clusters ermittelt wird.

16. Verfahren nach Anspruch 15,
**dadurch gekennzeichnet, dass**
die optimale Anzahl an Sitzplätzen für Normaltarifpassagiere in einem Cluster durch die Addition der durchschnittlichen Anzahl der Normaltarifpassagiere oder des Anteils der Normaltarifpassagiere an der frei vorgegebenen fixen Anzahl Passagiere des Clusters und der zweifachen Standardabweichung der Anzahl der Normaltarifpassagiere oder des Anteils der Normaltarifpassagiere an der frei vorgegebenen fixen Anzahl Passagiere desselben Clusters ermittelt wird.

17. Computerprogrammprodukt zur Ausführung des Verfahrens nach einem der vorhergehenden Ansprüche.

# Fig. 1

# Fig. 2

EP 2 927 849 A1

| Datum | Flugnr. | Abflugsort | Abflugszeit | Ankunftsort | Ankunftszeit | Ticketeinkünfte | Beförderungskl. | Flugzeugtyp | Sitzplatzanzahl | Sitzkonfiguration |
|---|---|---|---|---|---|---|---|---|---|---|
| 01.01.2013 | LH400 | FRA | 09:50 | JFK | 18:55 | 4.143,00 € | First | A333 | 221 | 8/48/165 |
| 01.01.2013 | LH400 | FRA | 09:50 | JFK | 18:55 | 1.365,90 € | Business | A333 | 221 | 8/48/166 |
| 01.01.2013 | LH400 | FRA | 09:50 | JFK | 18:55 | 1.365,90 € | Business | A333 | 221 | 8/48/167 |
| 01.01.2013 | LH400 | FRA | 09:50 | JFK | 18:55 | 1.365,90 € | Business | A333 | 221 | 8/48/168 |
| 01.01.2013 | LH400 | FRA | 09:50 | JFK | 18:55 | 1.365,90 € | Business | A333 | 221 | 8/48/169 |
| 01.01.2013 | LH400 | FRA | 09:50 | JFK | 18:55 | 727,90 € | Economy | A333 | 221 | 8/48/170 |
| 01.01.2013 | LH400 | FRA | 09:50 | JFK | 18:55 | 584,10 € | Economy | A333 | 221 | 8/48/171 |
| 01.01.2013 | LH400 | FRA | 09:50 | JFK | 18:55 | 504,00 € | Economy | A333 | 221 | 8/48/172 |
| 01.01.2013 | LH400 | FRA | 09:50 | JFK | 18:55 | 444,00 € | Economy | A333 | 221 | 8/48/173 |
| 01.01.2013 | LH400 | FRA | 09:50 | JFK | 18:55 | 444,00 € | Economy | A333 | 221 | 8/48/174 |
| 01.01.2013 | LH400 | FRA | 09:50 | JFK | 18:55 | 430,20 € | Economy | A333 | 221 | 8/48/175 |
| 01.01.2013 | LH400 | FRA | 09:50 | JFK | 18:55 | 427,00 € | Economy | A333 | 221 | 8/48/176 |
| 01.01.2013 | LH400 | FRA | 09:50 | JFK | 18:55 | 427,40 € | Economy | A333 | 221 | 8/48/177 |
| 01.01.2013 | LH400 | FRA | 09:50 | JFK | 18:55 | 415,50 € | Economy | A333 | 221 | 8/48/178 |
| 01.01.2013 | LH400 | FRA | 09:50 | JFK | 18:55 | 404,00 € | Economy | A333 | 221 | 8/48/179 |
| 01.01.2013 | LH400 | FRA | 09:50 | JFK | 18:55 | 404,00 € | Economy | A333 | 221 | 8/48/180 |
| 01.01.2013 | LH400 | FRA | 09:50 | JFK | 18:55 | 404,00 € | Economy | A333 | 221 | 8/48/181 |
| 01.01.2013 | LH400 | FRA | 09:50 | JFK | 18:55 | 404,00 € | Economy | A333 | 221 | 8/48/182 |
| 01.01.2013 | LH400 | FRA | 09:50 | JFK | 18:55 | 404,00 € | Economy | A333 | 221 | 8/48/183 |
| 01.01.2013 | LH400 | FRA | 09:50 | JFK | 18:55 | 404,00 € | Economy | A333 | 221 | 8/48/184 |
| 01.01.2013 | LH400 | FRA | 09:50 | JFK | 18:55 | 402,00 € | Economy | A333 | 221 | 8/48/185 |
| 01.01.2013 | LH400 | FRA | 09:50 | JFK | 18:55 | 401,10 € | Economy | A333 | 221 | 8/48/186 |
| 01.01.2013 | LH400 | FRA | 09:50 | JFK | 18:55 | 396,30 € | Economy | A333 | 221 | 8/48/187 |
| 01.01.2013 | LH400 | FRA | 09:50 | JFK | 18:55 | 396,30 € | Economy | A333 | 221 | 8/48/188 |
| 01.01.2013 | LH400 | FRA | 09:50 | JFK | 18:55 | 395,90 € | Economy | A333 | 221 | 8/48/189 |
| 01.01.2013 | LH400 | FRA | 09:50 | JFK | 18:55 | 395,90 € | Economy | A333 | 221 | 8/48/190 |
| 01.01.2013 | LH400 | FRA | 09:50 | JFK | 18:55 | 387,80 € | Economy | A333 | 221 | 8/48/191 |
| 01.01.2013 | LH400 | FRA | 09:50 | JFK | 18:55 | 387,80 € | Economy | A333 | 221 | 8/48/192 |
| 01.01.2013 | LH400 | FRA | 09:50 | JFK | 18:55 | 387,70 € | Economy | A333 | 221 | 8/48/193 |
| 01.01.2013 | LH874 | HAM | 08:00 | FRA | 08:50 | 132,50 € | Economy | A321 | 181 | 31/150 |

# Fig. 3

# Fig. 4

# Fig. 5

## Fig. 6

| Datum | Flugnr. | Abflugsort | Ankunftsort | Funktionsparameter | | Bestimmtheitsmaß | Sitzkonfiguration | Anzahl Passagiere | | |
| --- | --- | --- | --- | --- | --- | --- | --- | --- | --- | --- |
| | | | | B | m | $R^2$ | | First | Business | Economy |
| 01.01.2013 | LH400 | FRA | JFK | 3,7653 | -0,5033 | 0,9997 | 8/48/165 | 1 | 8 | 148 |
| 01.01.2013 | LH401 | JFK | FRA | 3,4088 | -0,3707 | 0,9973 | 8/48/165 | 0 | 21 | 168 |
| 01.01.2013 | LH403 | EWR | FRA | 3,4830 | -0,3887 | 0,9952 | 8/66/278 | 4 | 27 | 281 |
| 01.01.2013 | LH402 | FRA | EWR | 3,5140 | -0,3738 | 0,9977 | 8/66/278 | 0 | 27 | 273 |
| 01.01.2013 | LH408 | DUS | EWR | 3,3351 | -0,3340 | 0,9710 | 0/48/270 | 0 | 19 | 272 |
| 01.01.2013 | LH412 | MUC | EWR | 3,4755 | -0,4061 | 0,9927 | 8/48/165 | 1 | 6 | 169 |
| | | | | | | | | | | |

# Fig. 7

# Fig. 8

| Abflugsort | Ankunftsort | Funktionsparameter | | Geradensteigungen | | Normaltarifpassagiere | |
|---|---|---|---|---|---|---|---|
| | | B | m | ja | jb | Durchschnitt | Standardabweichung |
| FRA | Nordamerika | 4,1423 | -0,6558 | 8,8413 | 4,8187 | 35 | 9 |
| | | | | | | | |

EP 2 927 849 A1

## Fig. 9

**Europäisches Patentamt**
**European Patent Office**
**Office européen des brevets**

# EUROPÄISCHER RECHERCHENBERICHT

**Nummer der Anmeldung**

EP 14 16 3109

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, Bd. 30, Nr. 11, 1. November 2007 (2007-11-01), Seiten 592-593, XP007905525, ISSN: 0170-9291 * Der gemäß Artikel 92 EPÜ unter angemessener Berücksichtigung der Beschreibung und der Zeichnungen betrachtete Anspruchsgegenstand bezieht sich auf Verfahren aus der Liste von Gegenständen und Tätigkeiten, die nach Artikel 52 (2) und (3) EPÜ von der Patentierbarkeit ausgeschlossen sind. Die Informationstechnologie, die als Vehikel zur Ausführung der genannten Verfahren eingesetzt wird, ist konventioneller Art. Ihre Verwendung zur Ausführung nichttechnischer Verfahren gehört zum allgemeinen Fachwissen, und sie war am Anmeldetag der vorliegenden Anmeldung jedermann ohne Weiteres zugänglich. Die Angabe von Unterlagen erübrigt sich somit. * | 1-17 | INV. G06Q10/06 |

-----

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| Den Haag | 20. August 2014 | Moltenbrey, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)